# EUROPÄISCHE PATENTSCHRIFT

(11) **EP 0 541 478 B1**
(45) Veröffentlichungstag und Bekanntmachung des Hinweises auf die Patenterteilung: **06.04.1994**
(21) Anmeldenummer: 92810008.0
(22) Anmeldetag: 07.01.1992
(51) Int. Cl.: B65D 5/02, B65D 5/54

(54) **Verpackung, insbesondere für Bücher**
Package, especially for books
Emballage, en particulier pour livres

(30) Priorität: 04.11.1991 CH 3206/91
(43) Veröffentlichungstag der Anmeldung: 12.05.1993
(73) Patentinhaber: BRIEGER VERPACKUNGEN AG, CH-8010 Zürich (CH)
(72) Erfinder: Tredici, Roberto, CH-6330 Cham (CH)
(74) Vertreter: von Foerster, Eckard

(56) Entgegenhaltungen:
- AT-B- 380 850
- FR-A- 2 512 784
- US-A- 3 295 741

## Beschreibung

Die Erfindung betrifft eine Verpackung für quaderförmiges Verpackungsgut, insbesondere Bücher, die im mittleren Bereich eines zum Umschliessen des Verpackungsguts bestimmten Kartonstreifens an parallel zu dessen gegenüberliegenden langen Aussenrändern sich erstreckenden Randstreifen befestigte und um einwärts versetzte Biegelinien schwenkbare innere Klappen aus Kartonstreifen zum Umschlagen um das Verpackungsgut aufweist, wobei die an die inneren Klappen zu beiden Seiten anschliessenden Bereiche des zum Umschliessen des Verpackungsgutes bestimmten Kartonstreifens äussere Klappen zum Umschlagen um das Verpackungsgut bilden.

Eine aus der DE-A 2 719 288 bekannte Verpackung dieser Art eignet sich besonders für den Versand von Büchern oder Broschüren, da für verschiedene Buchformate unterschiedlich grosse Verpackungen erhältlich sind, bei denen eine bestimmte Buchgrösse jeweils gerade zwischen die hochgestellten inneren Klappen hineinpasst, die dann um das Buch herumgeschlagen werden und über welche dann die dicht um das Buch herumgeschlagenen beiden äusseren Klappen zu liegen kommen, wobei das Buch durch die an den gegenüberliegenden Seiten gebildeten Knautschzonen geschützt ist, die von den über die einwärts angelenkten inneren Klappen vorstehenden Randzonen des zum Umschliessen des Buches bestimmten grossen Kartonstreifens gebildet sind. Für den Versand muss dieser Kartonstreifen dann aber noch mit einem Klebstreifen zusammengehalten werden oder die Verpackung muss mittels einer Schnur versandfähig verschlossen werden.

Für den Massenversand jeweils einzelner Bücher, beispielsweise in einem Verlag, ist diese Art des Verschliessens der Verpackung zu unwirtschaftlich weil zeitraubend, wobei auch bei Verwendung von Klebband mit Sorgfalt gearbeitet werden muss, damit eine solche Verpackung im rauhen Postbetrieb sich nicht öffnen kann.

Es sind Klebstoffbeschichtungen bekannt, die als Selbstklebestreifen nach Entfernung eines Abdeckpapiers so fest an einer dagegengedrückten Kartonschicht haften, dass die Kartonlagen an der Klebstelle nicht wieder voneinander trennbar sind, ohne den Karton zu zerstören. Bei Verwendung einer solchen für den Postversand vorteilhaften Klebverbindung an der Verpackung hat der Empfänger einer solchen dann Mühe, die im übrigen sehr stabile und vorzugsweise aus Wellkarton bestehende Verpackung ohne Zuhilfenahme eines Werkzeugs zu öffnen.

Der vorliegenden Erfindung lag daher die Aufgabe zugrunde, eine Verpackung zu schaffen, die rationell, schnell und im Hinblick auf ein festes Verschliessen der Verpackung zuverlässig verschlossen werden kann und die dann vom Empfänger auch bequem ohne Zuhilfenahme eines Werkzeugs geöffnet werden kann.

Die für den Schutz eines Buchs auf dem Versandweg entsprechend stabil ausgebildete Verpackung sollte nicht nach einmaligem Gebrauch weggeworfen werden müssen, weil sie ihre Aufgabe ohne weiteres auch mehr als einmal erfüllen könnte. Auch aus Umweltschutzgründen ist die Reduzierung der zur Vernichtung bestimmten Menge an gebrauchter Verpackung anzustreben. Die der vorliegenden Erfindung zugrunde liegende Aufgabe erstreckt sich daher auch darauf, eine einfach und schnell verschliessbare und ohne Werkzeug bequem zu öffnende Verpackung zu schaffen, die mehr als einmal verwendbar ist, um mit dieser beispielsweise ein von einem Verlag zur Ansicht versandtes Buch in der gleichen Verpackung wieder zurücksenden zu können.

Die Aufgabe wird durch die Merkmale des kennzeichnenden Teils des Anspruchs 1 gelöst.

Weitere Einzelheiten und Vorteile der erfindungsgemässen Verpackung ergeben sich aus der nachfolgenden Beschreibung und den Zeichnungen, in denen eine Ausführungsform der Verpackung rein beispielsweise dargestellt ist. Es zeigen:
Fig. 1 die Verpackung im geöffneten Zustand, in schaubildlicher Darstellung,
Fig. 2 die nach dem erstmaligen Gebrauch aufgerissene und wiederverwendbare Verpackung, in schaubildlicher Darstellung.

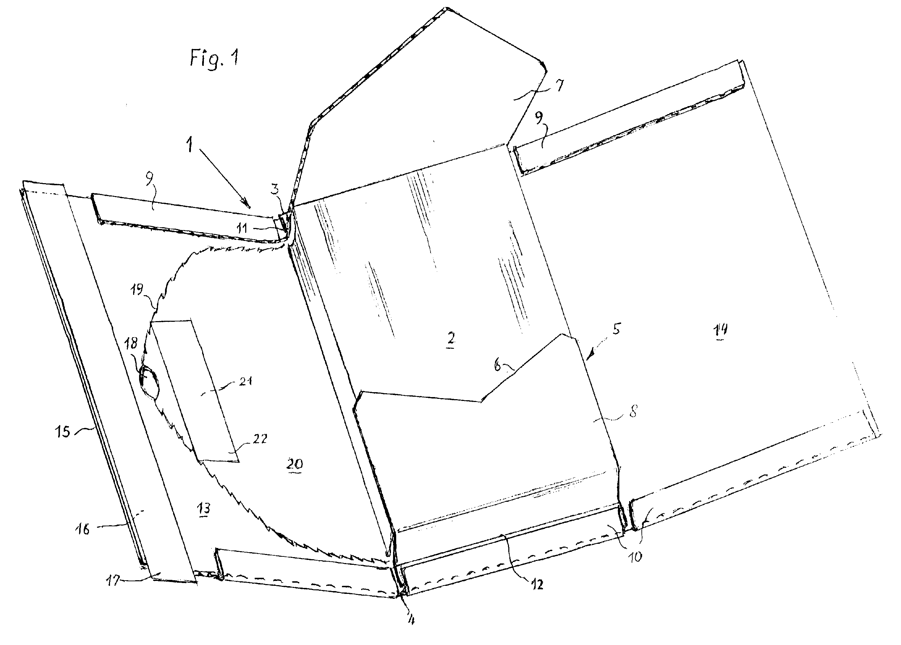

Die in Fig. 1 dargestellte Verpackung besteht aus einem länglichen Kartonstreifen 1, der um das Verpackungsgut 2, wie beispielsweise ein Buch, ganz herumzuschlagen bestimmt ist, sowie aus einem weiteren im mittleren Bereich des Kartonstreifens 1 zwischen einander gegenüberliegenden Randstreifen 3 und 4 desselben sich erstreckenden weiteren Kartonstreifen 5, der in der Mitte längs einer im Winkel verlaufenden Perforationslinie 6 trennbar ist, sodass zwei innere Klappen 7 und 8 entstehen, von denen die innere Klappe 7 in Fig. 1 hochgeschwenkt dargestellt ist. Der die beiden inneren Klappen 7 und 8 umfassende Kartonstreifen 5 ist entlang der Randstreifen 3 und 4 an dem länglichen Kartonstreifen 1 befestigt, beispielseise verklebt, und zusätzlich greifen auf beiden gegenüberliegenden Längsseiten des Kartonstreifens 1 die einwärts umgelegten Längsränder 9 und 10 auch über die Randzonen des in der Mitte quer angeordneten Kartonstreifens 5, so dass die beiden Klappen 7 und 8 sehr solid am Kartonstreifen 1 befestigt sind. Die beiden Klappen 7 und 8 werden demnach um die einwärts liegende Endkante des nach innen umgelegten und verklebten Längsrandes 9 beziehungsweise 10 hochgeschwenkt, so dass an dieser Stelle die Biegelinie 11 bzw. 12 für die Klappe 7 bzw. 8 liegt.

Da der Kartonstreifen 1 sowie der zur Bildung der beiden inneren Klappen 7 und 8 dienende Kartonstreifen 5 vorzugsweise aus Wellpappe bestehen und die Wellen in den beiden Klappen 7 und 8 parallel zu den Biegelinien 11 bzw. 12 und die Wellen in dem länglichen Kartonstreifen 1 rechtwinklig dazu verlaufen, lassen sich die inneren Klappen 7 und 8 um unterschiedlich dicke Bücher längs irgendeiner der Wellen als Biegelinie umknicken. Dasselbe gilt auch für die zu beiden Seiten an die inneren Klappen 7 und 8 anschliessenden, als äussere Klappen 13 und 14 bezeichneten Bereiche des zum Umschliessen des Verpackungsgutes bestimmten länglichen Kartonstreifens 1.

Durch die nach innen umgelegten Längsränder 9 und 10 an den beiden gegenüberliegenden Seiten des Kartonstreifens 1 sind nicht nur die beiden inneren Klappen 7 und 8 sehr gut befestigt, sondern ist auch die nach dem Umschlagen der beiden äusseren Klappen 13 und 14 um das Verpackungsgut an diesen beiden Seiten entstehende Knautschzone besonders stabil, um das Verpackungsgut zu schützen.

Die äussere Klappe 13 ist parallel zu ihrem Endrand 15 über die ganze Klappenlänge mit einer Selbsklebeschicht 16 versehen, die mit einem Schutzpapier 17 abgedeckt ist, das zu entfernen ist, um die Verpackung mit dem darin enthaltenen Verpackungsgut 2 versandfertig zu verschliessen. Die Selbsklebeschicht haftet äusserst stark auf der zuerst umgeschlagenen äusseren Klappe 14, so dass sich diese Verklebung nicht ohne Zerstörung der Kartonschichten trennen lässt. Die flachliegend mit der Selbsklebeschicht und dem Abdeckpapier angelieferte Verpackung lässt sich daher sehr schnell lediglich durch Wegziehen des Abdeckpapiers versandfertig verschliessen. Der Empfänger hat dann jedoch Mühe, die sehr stabile Verpackung ohne Zuhilfenahme eines Werkzeugs zu öffnen bzw. müsste die äusseren Klappen unter Kraftaufwand auseinanderreissen. Um die Verpackung leicht und für die Entnahme des Verpackungsgutes in vorteilhaftester Weise öffnen zu können, ist daher in einer der Klappen, vorzugsweise in der die Selbsklebeschicht 16 tragenden Klappe 13, eine von einem bezüglich der langen Aussenränder des Kartenstreifens 1 mittig gelegenden Aufreissanfang in Form eines Loches 18 in der Klappe zuerst schräg zu diesen langen Aussenrändern hin und dann im wesentlichen parallel zu den langen Aussenrändern bis etwa vor das Ende der Biegelinie 11 bzw. 12 der beiden inneren Klappen verlaufende vorgestanzte Perforationslinie 19 ausgebildet. Bei der durch Klebung verschlossenen Verpackung lässt sich dann mit einem Finger oder dem Daumen am Loch 18 eingreifend ein einwärts der Perforationslinie 19 befindlicher Klappenabschnitt 20 aufreissen. Da dieser zu öffnende Klappenabschnitt 20 so breit ist, wie das Abstandsmass zwischen den beiden inneren Klappen 7 und 8 an ihren Biegelinien 11 und 12, lässt sich das Verpackungsgut 2 bequem seitlich herausziehen.

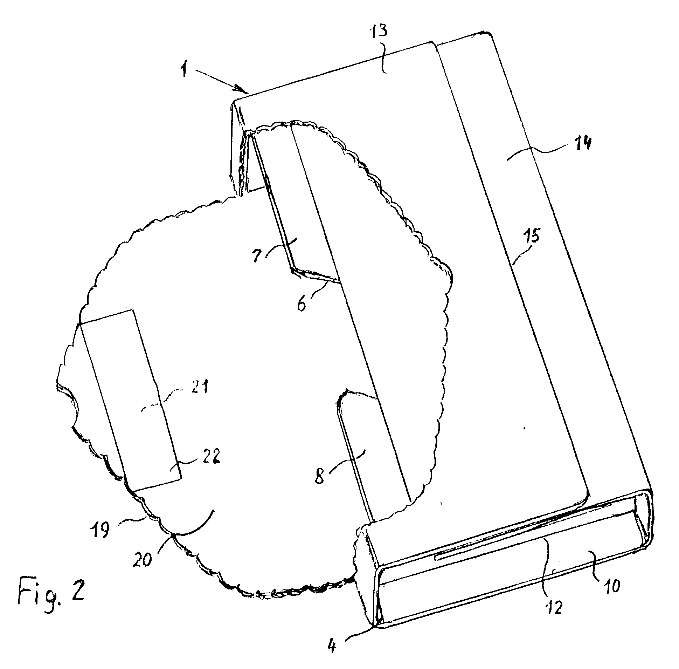

Der von der Perforationslinie 19 umgrenzte Abschnitt 20 der äusseren Klappe 13 kann zweckmässig noch mit einer weiteren Selbsklebeschicht 21 einwärts von dem Loch 18 und ebenfalls parallel zu dem äusseren Klappenrand 15 verlaufend versehen sein, welche Selbsklebeschicht 21 ebenfalls mit einem Schutzpapierstreifen 22 abgedeckt ist. Wie aus Fig. 2 hervorgeht, lässt sich damit der durch Aufreissen der Perforationslinie 19 freiliegende Klappenabschnitt 20 wieder mit der zweiten äusseren Klappe 14 verkleben und die Verpackung dadurch erneut bündig verschliessen, um ein zweites Mal verwendet zu werden. In beiden Fällen geht das Verschliessen der Verpackung sehr schnell, da die Mittel dazu bereits an der Verpackung vorhanden sind.

## Patentansprüche

1. Verpackung für quaderförmiges Verpackungsgut, insbesondere Bücher, die im mittleren Bereich eines zum Umschliessen des Verpackungsgutes bestimmten Kartonstreifens (1) an parallel zu dessen gegenüberliegenden langen Aussenrändern sich ertreckenden Randstreifen (3,4) befestigte und um einwärts versetzte Biegelinien (11,12) schwenkbare innere Klappen (7,8) aus Kartonstreifen zum Umschlagen um das Verpackungsgut (2) aufweist, wobei die an die inneren Klappen zu beiden Seiten anschliessenden Bereiche des zum Umschliessen des Verpackungsgutes bestimmten Kartonstreifens äussere Klappen (13,14) zum Umschlagen um das Verpackungsgut bilden, dadurch gekennzeichnet, dass eine der sich einander zu überlappen bestimmten äusseren Klappen (13,14) eine im Ueberlappungsbereich parallel zu den kürzeren Aussenrändern verlaufende und mit einer entfernbaren Schutzabdeckung versehene Selbstklebeschicht (16) aufweist und dass eine der äusseren Klappen eine innerhalb der Klappe von einem bezüglich der langen Aussenränder mittigen Aufreissanfang (18) zuerst schräg zu diesen langen Aussenrändern hin und dann im wesentlichen parallel zu den langen Aussenrändern bis etwa vor das Ende der Biegelinie (11,12) jeder der inneren Klappen (7,8) verlaufende vorgestanzte Perforationslinie (19) zum Aufreissen eines Abschnitts (20) der Klappe zwecks seitlichem Herausziehen des Verpackungsgutes (2) aus der wiederverwendbaren Verpackung aufweist.

2. Verpackung nach Anspruch 1, dadurch gekennzeichnet, dass die gleiche äussere Klappe (13) die Perforationslinie (19) zum Aufreissen und zwischen deren Aufreissanfang (18) und dem Klappenendrand (15) innenseitig die abgedeckte Selbstklebeschicht (16) aufweist.

3. Verpackung nach Anspruch 2, dadurch gekennzeichnet, dass die die Perforationslinie (19) zum Aufreissen und die randparallele Selbstklebeschicht (16) aufweisende äussere Klappe (13) an dem von der Perforationslinie umgrenzten, aufreissbaren Klappenabschnitt (20) innenseitig eine weitere abgedeckte Selbstklebeschicht (21) zum Verkleben des aufgerissenen Klappenabschnitts (20) mit der zweiten äusseren Klappe (14) zwecks Wiederverwendung der verschlossenen Verpackung aufweist.

4. Verpackung nach Anspruch 1,dadurch gekennzeichnet, dass die Perforationslinie (19) in der äusseren Klappe (13) vom Rand eines den Aufreissanfang bildenden Loches (18) in der Klappe ausgeht.

5. Verpackung nach Anspruch 1, dadurch gekennzeichnet, dass der zum Umschliessen des Verpackungsguts (2) bestimmte Kartonstreifen (1) einwärts umgelegte und verklebte Längsränder (9,10) aufweist und die inneren Klappen (7,8) zwischen den beiden Kartonlagen in einem mittleren Abschnitt jedes der beiden umgelegten Längsränder (9,10) festgeklebt sind.

6. Verpackung nach einem der vorhergehenden Ansprüche, dadurch gekennzeichnet, dass der zum Umschliessen des Verpackungsguts bestimmte Kartonstreifen (1) und die an diesem befestigten inneren Klappen (7,8) jeweils aus Wellpappe bestehen und die Wellen der Klappen rechtwinklig zu den Wellen des Kartonstreifens (1) verlaufen, derart,dass die inneren und die äusseren Klappen längs jeweils einer beliebigen der Wellen als Biegelinie um das Verpackungsgut umschlagbar sind.

## Claims

1. Package for square shaped commodities to be packed, especially books, which includes in the center area of a cardboard strip (1) intended to be wrapped around the commodity to be packed inner flaps (7, 8) made of cardboard strips mounted to edge strips (3, 4) extending parallel to its oppositely located long outer edges and pivotable around folding lines (11, 12) displaced inwards, whereby the areas of the cardboard strip intended to be wrapped around the commodity, to be packed located at both sides adjacent the inner flaps (7, 8) form outer flaps (13, 14) to be wrapped around the commodity to be packed, characterized in that one of the outer flaps (13, 14) intended to overlap each other includes a self adhering layer (16) extending in the overlap area parallel to the shorter outer edges and equipped with a removable protective cover (16) and that one of the outer flaps includes a pre-punched perforation line (19) extending from inside of the flap from a tear-open begin (18) located centrally relativ to the long outer edges initially obliquely towards these long outer edges and thereafter substantially parallel to the long outer edges until about ahead of the end of the folding line (11, 12) of each of the inner flaps (7, 8) for a tearing open of a section (20) of the flap for the purpose of a lateral pulling the commodity (2) to be packed out of the re-usable package.

2. Package according to claim 1, characterized in that the same outer flap (13) includes the perforation line (19) to be torn open and the covered self adhering layer (16) at the inside between its tear open begin (18) and the edge (15) of the flap.

3. Package according to claim 2, characterized in that the outer flap (13) which includes the perforation line (19) to be torn open and the edge parallel self adhering layer (16) includes within the section (20) of the flap which is to be torn open which is circumscribed by the perforation line a further covered self adhering layer (21) for a pasting of the torn open flap section (20) to the second outer flap (14) for a re-use of the closed package.

4. Package according to claim 1, characterized in that the perforation line (19) in the outer flap (13) proceeds from the edge of a hole (18) in the flap forming the tear open begin.

5. Package according to claim 1, characterized in that the cardboard strip (1) intended to be wrapped around the commodity (2) to be packed includes folded in glued longitudinal edges (9, 10) and the inner flaps (7, 8) are glued between the two cardboard layers in a center section of each of the two folded over longitudinal edges (9, 10).

6. Package according to one of the preceeding claims, characterized in that the cardboard strip (1) intended to be wrapped around the commodity to be packed and the inner flaps (7, 8) mounted thereto consist all of corrugated cardboard and the corrugations of the flaps extend perpendicularly to the corrugations of the cardboard strip (1), such that the inner and the outer flaps can be folded along a respective arbitrary of the corrugations as folding line over the commodity to be packed.

## Revendications

1. Emballage pour objets rectangulaires à emballer, en particulier des livres, présentant, dans la région centrale d'une bande en carton (1) destinée à entourer les objets à emballer, des volets intérieurs (7, 8) qui sont constitués par des bandes de carton, sont conçus pour être rabattus autour des objets (2) à emballer, peuvent pivoter autour de lignes de pliage (11, 12) décalées vers l'intérieur, et sont fixés à des bandes marginales (3, 4) s'étendant parallèlement aux bords extérieurs longs, mutuellement opposés, de ladite bande en carton, les régions de la bande en carton destinée à entourer les objets à emballer, qui sont attenantes de part et d'autre aux volets intérieurs, formant des volets extérieurs (13, 14) conçus pour être rabattus autour des objets à emballer, caractérisé par le fait que l'un des volets extérieurs (13, 14), destinés à se chevaucher mutuellement, comporte une couche autocollante (16) qui est munie d'un recouvrement protecteur amovible et s'étend, dans la zone de chevauchement, parallèlement aux bords extérieurs plus courts ; et que l'un des volets extérieurs comporte une ligne de perforations (19) prédécoupée s'étendant à l'intérieur du volet, à partir d'une amorce d'arrachage (18) centrale par rapport aux bords extérieurs longs, tout d'abord à l'oblique en direction de ces bords extérieurs longs, puis pour l'essentiel parallèlement aux bords extérieurs longs, sensiblement jusqu'à une courte distance précédant l'extrémité de la ligne de pliage (11, 12) de chacun des volets intérieurs (7, 8), en vue d'ouvrir par déchirure un segment (20) du volet, afin d'extraire latéralement les objets (2) à emballer hors de l'emballage réutilisable.

2. Emballage selon la revendication 1, caractérisé par le fait que le même volet extérieur (13) présente la ligne de perforations (19) conçue pour l'ouverture par déchirure, et la couche autocollante (16) recouverte qui occupe une position interne entre l'amorce d'arrachage (18) de ladite ligne et le bord extrême (15) du volet.

3. Emballage selon la revendication 2, caractérisé par le fait que le volet extérieur (13), présentant la ligne de perforations (19) conçue pour l'ouverture par déchirure et la couche autocollante (16) parallèle au bord, comporte, sur le segment (20) pouvant être ouvert par déchirure et délimité périphériquement par la ligne de perforations, une autre couche autocollante (21) qui est recouverte et occupe une position interne, afin de coller le segment (20) ouvert par déchirure avec le second volet extérieur (14), en vue d'une réutilisation de l'emballage fermé.

4. Emballage selon la revendication 1, caractérisé par le fait que la ligne de perforations (19) ménagée dans le volet extérieur (13) part du bord d'un trou (18) pratiqué dans ledit volet et formant l'amorce d'arrachage.

5. Emballage selon la revendication 1, caractérisé par le fait que la bande en carton (1), destinée à entourer les objets (2) à emballer, présente des bords longitudinaux (9, 10) rabattus vers l'intérieur et collés, et les volets intérieurs (7, 8) sont assujettis par collage, entre les deux couches de carton, dans une région centrale de chacun des deux bords longitudinaux rabattus (9, 10).

6. Emballage selon l'une des revendications précédentes, caractérisé par le fait que la bande en carton (1) destinée à entourer les objets à emballer, et les volets intérieurs (7, 8) fixés à ladite bande, consistent respectivement en du carton ondulé, et les ondulations des volets s'étendent à angle droit par rapport aux ondulations de la bande en carton (1), de telle sorte que les volets intérieurs et extérieurs puissent être rabattus, autour des objets à emballer, le long de l'une quelconque respective des ondulations, remplissant la fonction d'une ligne de pliage.
